# EUROPÄISCHE PATENTANMELDUNG

(11) **EP 4 841 961 A1**
(43) Veröffentlichungstag der Anmeldung: **18.11.2026**
(21) Anmeldenummer: 26152451.6
(22) Anmeldetag: 16.01.2026
(51) Int. Cl.: H04L 67/12, H04L 9/40

(54) **VERFAHREN ZUM BETRIEB EINES SMART METER GATEWAYS**

(30) Priorität: 12.05.2025 DE 102025118093
(71) Anmelder: Theben Smart Energy GmbH, 72401 Haigerloch (DE)
(72) Erfinder: Kapusta, Andreas, 72351 Geislingen (DE); Strobel, Rainer, 72414 Rangendingen (DE)
(74) Vertreter: Westphal, Mussgnug & Partner Patentanwälte mbB

(57) **Zusammenfassung**

Bereitgestellt wird ein Verfahren zum Betrieb eines SMGW (10), bei dem das SMGW (10) über ein GWA System (50) durch bedarfsweisen Aufbau einer MANAGEMENT Verbindung (100) zwischen GWA System (50) und SMGW (10) administriert wird, bei dem die MANAGEMENT Verbindung (100) unter Verwendung einer vom SMGW (10) selbständig aufgebauten und unterhaltenen Verbindung (110) über das Internet (30), die vom SMGW (10) ausgeht und an einem SMGW-Abstractor (40) terminiert und vom SMGW-Abstractor (40) offengehalten wird, und einer bedarfsweise vom SMGW-Abstractor (40) zum GWA System (50) aufgebauten temporären Verbindung (130) gebildet wird.

## Beschreibung

Smart Meter Gateways (SMGW) sind die zentralen Komponenten intelligenter Messsysteme. Sie empfangen Messdaten von Zählern, speichern diese und bereiten sie für Marktakteure auf. Dementsprechend dienen sie als zentrale Kommunikationseinheit intelligenter Messsysteme, über die die Kommunikation
- mit dem Lokalen Metrologischen Netz (Local Metrological Network, LMN) mit Verbrauchsmesstellen eines oder mehrerer Verbraucher,
- mit dem Heimnetz (Home Area Network, HAN) des Letztverbrauchers, insbesondere mit steuerbaren Energieverbrauchern oder Energieerzeugern, und
- mit dem Weitverkehrsnetz (Wide Area Network, WAN), insbesondere mit dem SMGW-Administrator (GWA) bzw. dessen GWA System und externen Marktteilnehmern
abgewickelt wird.

SMGW werden von Verteilnetzbetreibern, welcher für die Zähler bei den Endkunden zuständig ist, im Zählerschrank der Endkunden verbaut. Dieser Netzbetreiber wird als zuständiger Messtellenbetreiber (MSB) bezeichnet. SMGWs stellen eine zuverlässig und datenschutztechnisch sichere bidirektionale Kommunikation zum Zählerschrank zur Verfügung. Es können mehrere Zähler über ein SMGW angebunden werden.

Dabei erfolgt die Anbindung an zwei verschiedene Akteure:
- Externer Markt Teilnehmer (EMT)
   Empfänger der erfassten Zählerdaten eines angeschlossenen Zählers.
- Gateway Administrator
   zur sicherheitstechnischen und administrativen Verwaltung des SMGW

Smart Meter Gateways unterliegen strengen sicherheitstechnischen Richtlinien. Die Einhaltung dieser Richtlinien müssen entsprechend in einem Zertifizierungsprozess des BSI nachgewiesen werden. Dabei werden alle sicherheitskritischen Elemente, welche der Zertifizierung, unterliegen im sogenannten "Target of Evaluation" (TOE) zusammengefasst. Dieses TOE wird durch das Protection Profile (PP) für SMGWs umrissen.

Gemäß dem aktuellen Stand der Technik wird die Anbindung der Netzwerkkommunikation üblicherweise über Mobilfunk-Module außerhalb des TOEs realisiert, die eine LTE-Kommunikationsverbindung aufbauen können und denen zur Vereinfachung des Handlings eine statische IP-Adresse einfach zugewiesen werden kann. Typischerweise betreibt der zuständige Messtellenbetreiber eine eigene Kommunikationsverbindung über Mobilfunk, insbesondere LTE, zum SMGW. Diese verursacht zum einen zusätzliche kosten. Außerdem ist der Mobilfunkempfang oft sehr schlecht, da in der Praxis SMGWs oft an Einbauorten installiert werden, an denen LTE-Kommunikationsverbindungen nicht aufgebaut werden können, weil das LTE-Signal zu schwach ist.

Zudem sind die Kosten für das Datenvolumen innerhalb des privaten GWA-Netzwerkes und dem GWA hoch. Daher soll hier die erforderliche Interaktion so sparsam wie möglich erfolgen.

Standardmäßig wird der Verbindungsaufbau nur vom SMGW angestoßen ("outbound only communication"). D.h. Das SMGW baut einen TLS-Kanal (TLS → Transport Layer Security) zu den EMTs auf, um Messwerte auszuliefern oder zum GWA, um Befehle von diesem entgegenzunehmen.

Die einzige Ausnahme dieser Regel bildet das sogenannte "Wakeup". Hier kann der GWA für (außerplanmäßige) administrative Aufgaben dem SMGW mitteilen, dass es einen Administrations-Kanal (Management-Kanal) aufbauen soll. Dazu wird ein spezifisches UDP-Paket (User Datagram Protokoll) verwendet, welches an das SMGW gesendet wird.

Grundsätzlich kann man daran denken, statt auf eine Mobilfunkverbindung auf einen kabelgebundenen Internetanschluss des Letztverbrauchers bzw. den Hausanschluss zurückzugreifen. Dies ist aber regelmäßig nur mit größeren Eingriffen und aufwändigen Rekonfigurationen des Routers, der dem Letztverbraucher gehört und in dessen Verwaltungshoheit ist, erreichbar und kann zu Problemen mit der Erreichbarkeit des SMGW von außen führen, die beispielsweise für den getriggerten Aufbau einer MANAGEMENT Verbindung notwendig ist, weil dafür eine dem GWA bekannte IP-Adresse notwendig ist, die beispielsweise bei einer statischen Zuordnung der IP-Adresse zum SMGW verfügbar ist, so dass er sie adressieren kann. Die bekannte IP-Adresse wird üblicherweise statisch in den GWA Systemen hinterlegt und gegebenenfalls aktualisiert, sofern eine Kommunikation vom SMGW aufgebaut wird. Da die DSL-Verbindung der Endkunden keine feste IP-Adresszuordnung hat, kann der GWA keine "Wakeup" Pakete direkt an das SMGW senden. Außerdem kann über den Endkundenrouter keine direkte Anbindung in das private GWA-Netz realisiert werden. Somit kann das SMGW auch keinen TLS-Kanal zum GWA aufbauen.

Sowohl für GWA als auch SMGW sind keine Änderungen im Protokoll und Konzept möglich. D.h. eine mögliche Endkunden-DSL-Anbindung muss für diese exakt gleich funktionieren wie bei den bisherigen Verbindungsarten.

Die Aufgabe der Erfindung besteht daher darin, ein Verfahren zum Betrieb eines Smart Meter Gateways anzugeben, das in Anwendungsfällen, in denen eine LTE-Kommunikationsverbindung nicht aufgebaut werden kann, anwendbar ist und zu einer verbesserten Anwendbarkeit führt.

Ein erster Aspekt dieser Aufgabe, der den getriggerten Aufbau einer MANAGEMENT Verbindung betrifft, wird gelöst durch ein Verfahren zum Betrieb eines Smart Meter Gateways mit den Merkmalen des Anspruchs 1.

Ein davon unabhängiger zweiter Aspekt dieser Aufgabe, der eine mit einem besonders geringen Aufwand verbundene Herstellung der Verbindung zwischen dem SMGW und einem Router, der die Verbindung zum Internet über einen kabelgebundenen Hausanschluss herstellt, betrifft, wird gelöst durch ein Verfahren zum Betrieb eines Smart Meter Gateways mit den Merkmalen des Anspruchs 5.

Vorteilhafte Weiterbildungen der Aspekte der Erfindung sind Gegenstand der jeweiligen abhängigen Ansprüche.

Bei dem Verfahren zum Betrieb eines SMGW gemäß des ersten Aspekts der Erfindung wird das SMGW über ein GWA System durch bedarfsweisen Aufbau einer MANAGEMENT Verbindung zwischen GWA und SMGW administriert, die sich dadurch auszeichnet, dass die MANAGEMENT Verbindung unter Verwendung von mindestens zwei Teilverbindungen aufgebaut wird, nämlich einerseits einer vom SMGW selbständig aufgebauten und unterhaltenen Verbindung über das Internet, die vom SMGW ausgeht und an einem SMGW-Abstractor terminiert, also dort endet, und vom SMGW-Abstractor offengehalten wird, und andererseits einer bedarfsweise vom SMGW-Abstractor zum GWA System aufgebauten temporäre Verbindung. Der Begriff "terminiert" umfasst im Sinne dieser Offenbarung also nicht zwingend, dass auch eine Entschlüsselung ankommender TLS-Pakete und eine Weiterleitung entschlüsselter Pakete erfolgt.

Der SMGW-Abstractor im Sinne dieser Offenbarung ist dabei als ein System zu verstehen, das für das GWA System eine analoge Funktion erfüllt wie ein Frontend für einen Nutzer und auf einem für das GWA System adressierbaren System betrieben wird. Die Kommunikation des GWA Systems erfolgt mit dem SMGW-Abstractor und dieser leitet dann den entsprechende Input des GWA Systems an das eigentliche SMGW weiter und umgekehrt dessen Output an das GWA System. Ein Beispiel für ein solches System ist ein Proxy-Server. Eine beispielhafte Funktionsbeschreibung, aus der vom SMGW-Abstractor zu erfüllende Anforderungen hervorgehen, wird weiter unten in Usecases beschrieben.

Sofern das SMGW sich mit dem Internet verbinden kann, wird in einer ersten Variante der Erfindung die Verbindung, die insbesondere eine TLS-Verbindung sein kann, zum SMGW-Abstractor aufgebaut. Insbesondere wird diese Verbindung auch nach einer etwaigen Verbindungsunterbrechung automatisch wieder aufgebaut.

Der SMGW-Abstractor ist auf einem Gerät eingerichtet, das eine statische IP-Adresse aufweisen kann. Er kann auch auf derselben Hardware wie das GWA System selbst eingerichtet sein. Genau wie in Fällen, in denen das SMGW eine statische IP-Adresse besitzt, die es ermöglicht, dass das GWA System eine Anfrage zum Aufbau einer MANAGEMENT Verbindung an das entsprechende SMGW sendet, wird nun die Anfrage des GWA Systems an den SMGW-Abstractor gesendet, der sich bei vorhandener Berechtigung des GWA Systems temporär mit dem GWA System verbindet, mit der in dieser Variante der Erfindung die vom SMGW selbständig aufgebaute und unterhaltene Verbindung zwischen SMGW und SMGW-Abstractor zu einer MANAGEMENT Verbindung zwischen SMGW und GWA System ergänzt wird.

In einer zweiten Variante der Erfindung wird die Verbindung über das Internet, die vom SMGW ausgeht und an einem SMGW-Abstractor endet, erst dann vom SMGW-Abstractor offengehalten, wenn der SMGW-Abstractor einen Wake-up Call vom GWA erhalten hat. Das SMGW baut also anders als in der ersten Variante nicht unmittelbar eine TLS-Verbindung zum SMGW-Abstractor auf. Stattdessen sendet das SMGW periodisch TLS requests zum SMGW-Abstractor, der TLS handshake mit dem GWA-System erfolgt aber erst, nachdem der SMGW Abstractor den entsprechenden Wake-up Call erhalten hat, Daraufhin öffnet der SMGW-Abstractor eine IP Route für Requests vom SMGW zum GWA, und das SMGW kann einen TLS-Kanal direkt zum GWA aufbauen. Angemerkt sei an dieser Stelle, dass der SMGW-Abstractor insbesondere in dieser Variante der Erfindung auch als GWA-Abstractor oder GWA-Proxy aufgefasst und/oder bezeichnet werden kann.

Gemäß einer bevorzugten Ausführungsform der Erfindung wird der Aufbau der temporären Verbindung zwischen SMGW-Abstractor und GWA System durch einen Wake-Up Call initiiert, wobei der Wake-Up Call eine Identifikation des vom GWA System angeforderten SMGW enthält. Als besonders zweckmäßig hat es sich dabei erwiesen, wenn der Wake-Up Call über UDP (das User Datagram Protocol) erfolgt, wobei das Wake-Up-Paket an den SMGW-Abstractor gesendet wird.

Besonders bevorzugt erfolgt die Identifikation des vom GWA angeforderten SMGW über ein HUID-Matching unter Verwendung von Informationen zum SMGW-Zertifikat des jeweiligen SMGW. Dabei macht man sich zu Nutze, dass eine Zuordung der jeweiligen Zertifikate zu SMGWs auf dem GWA System ohnehin hinterlegt sein mussund das Client Zertifikat, welche die HUID des SMGWS enthält, in der TLS Version 1.2 unverschlüsselt und somit öffentlich zugänglich ist. Alternativ wird bei TLS Version 1.3 die SMGW HUID als "Private Use" Extension nach RFC 5246 (TLS v1.2) und RFC 8446 (TLS v1.3) zum TLS-Client Hello Request seitens SMGW hinzugefügt. Die Client Hello Nachricht und die darin enthaltenen Extensions sind bei der TLS-Version v1.3 nicht verschlüsselt, darauffolgende Handshake Pakete hingegen schon, deshalb kann die HUID nicht mehr, wie bei TLS in der Version 1.2, aus dem Client Zertifikat extrahiert werden. Der Mechanismus die SMGW HUID über Client Hello Extensions zu ermitteln ist auch in der TLS-Version v1.2 anwendbar. Zur Identifikation macht man sich ebenso zu Nutze, dass jegliche TLS-Verbindungen über den Abstractor geleitet werden. Eine Identifikation ist also auch unabhängig von der MANAGEMENT Verbindung auch über andere, durchgeleitete Verbindungen vom SMGW zum GWA möglich.

Bevorzugt ist, dass der SMGW-Abstractor wenn die MANAGEMENT Verbindung aufgebaut ist als Proxy-Server fungiert, der sich in Richtung des SMGW wie ein GWA System und in Richtung des GWA Systems wie ein SMGW verhält.

Ein Verfahren zum Betrieb eines SMGW gemäß des zweiten Aspekts der Erfindung zeichnet sich dadurch aus, dass das SMGW über einen Router mit dem Internet verbunden wird, wobei die Verbindung zum Router über eine an einem Ethernet-Anschluss des SMGW angesteckte erste CX-Bridge hergestellt ist. Diese Merkmale sind ebenso wie ihre weiter unten beschriebenen vorteilhaften Weiterbildungen sind auch in Kombination mit dem ersten Aspekt der Erfindung vorteilhaft einsetzbar.

Die CX-Bridge enthält einen Ethernet-Stecker, mit welchem sie an das SMGW angeschlossen werden kann sowie eine dem WLAN-Standard entsprechende Funkschnittstelle.

In einer ersten Variante wird die Verbindung der ersten CX-Bridge zum Router über eine WLAN-Verbindung hergestellt, was die benötigten Hardwareanforderungen reduziert, aber eine mit höherem Aufwand verbunden Konfiguration erforderlich werden lässt.

In einer zweiten, zur ersten Variante alternativen Ausführungsform des Verfahrens erfolgt die Verbindung der ersten CX-Bridge zum Router über eine zweite CX-Bridge, die an den Router angeschlossenen ist. Wenn ein Pairing zwischen der ersten und der zweiten CX-Bridge durchgeführt wird, kann man den Installationsprozess im Vergleich zur ersten Variante deutlich vereinfachen.

Das Pairing zwischen der ersten und der zweiten CX-Bridge wird durchgeführt, wenn keine Pairing-Informationen vorliegen oder wenn das Pairing durch einen Befehl des Anwenders gestartet wird. Während des Pairings wird über die Funkschnittstelle nach einer anderen CX-Bridge gesucht. Ist diese gefunden, tauschen die erste und die zweite CX-Bridge während des Pairing-Prozesses ihre Kennungen und Schlüssel aus, so dass nach erfolgreichem Pairing nur noch zwischen diesen beiden Geräten eine Verbindung aufgebaut werden kann (Mutual Authentication), die bevorzugt vollverschlüsselt ist. Dabei ist die CX-Bridge bevorzugt für den Einsatz im Umfeld eines intelligenten Messsystems konzipiert und optimiert, insbesondere im Hinblick auf seine Hardware und mechanische Installationsmöglichkeiten (wie z.B. Anbringbarkeit an einer Hutschiene) und/oder erlaubt auch die Anbindung von CLS-Komponenten an ein SMGW.

Die erste Variante des ersten Aspekts der Erfindung wird durch die folgenden Usecases beispielhaft weiter verdeutlicht:

### Usecase: Standard Connection

- **Actors:**
   ∘ GWA
   ∘ Smart Meter Gateway (SMGW)
- **Description:**
   ∘ Der SMGW baut ein TLS-Kanal zum beispielweise als GWA-Proxy ausgeführten SMGW-Abstractor auf
   ∘ Der SMGW-Abstractor (GWA-Proxy) leitet, nach Erhalt des WakeUp Pakets vom GWA, einen TLS-Kanalaufbau zum GWA ein.
   ∘
      ▪ Kanal 1: zum Smart Meter Gateway (SMGW)
      ▪ Kanal 2: zum GWA
- **Goal:**

Der GWA kann jederzeit durch Senden eines Wakeup-Pakets eine TLS-Verbindung zwischen sich und dem SMGW aufbauen
- **Prerequisites:**
   ∘ Der GWA verwendet für alle SMGWs die IP-Adresse des SMGW-Abstractor (GWA-Proxy)für WakeUp
   ∘ Das SMGW verwendet die IP-Adresse des SMGW-Abstractor (GWA-Proxy), um eine GWA TLS Verbindung anzufordern. Dabei ist im Client Zertifikat, mit welchem sich das SMGW beim Handshake meldet, die HUID des SMGWs enthalten.
   ∘ Das SMGW ist so konfiguriert, dass es periodisch versucht eine TLS-Verbindung zum SMGW-Abstractor (GWA-Proxy) aufzubauen
- **Steps:**
   ∘ Das SMGW sendet periodisch Requests zum SMGW-Abstractor (GWA-Proxy) einen TLS-Kanal aufzubauen
   ∘ Der SMGW-Abstractor (GWA-Proxy) terminiert den TLS-Kanal, die Verbindung zwischen SMGW-Abstractor (GMA-Proxy) und SMGW besteht und persistiert die entsprechende HUID zu diesem TLS-Kanal (Kanal 1).
   ∘ Irgendwann sendet der GWA ein (signiertes UDP-) Wakeup Paket zum SMGW-Abstractor (GWA-Proxy)
   ∘ Der SMGW-Abstractor (GWA-Proxy) akzeptiert das WakeUp des GWAs und matcht die bestehende TLS-Verbindung (Kanal 1) des SMGWs anhand der im WakeUp-Paket enthaltenen HUID.
   ∘ Der SMGW-Abstractor (GWA-Proxy) initiiert einen weiteren TLS Hand Shake Richtung GWA um auch hier einen TLS-Kanal (Nr. 2) aufzubauen.
   ∘ Sobald beide TLS-Kanäle aufgebaut sind, wird jegliche Kommunikation zwischen GWA und SMGW zwischen Kanal 1 und Kanal 2 weitergeleitet

### Usecase: Wakeup Weiterleitung

- **Actors:**
   ∘ GWA
   ∘ Smart Meter Gateway (SMGW)
- **Description:**
   ∘ Der GWA initiiert ein Wakeup
   ∘ Der SMGW-Abstractor (GWA-Proxy) leitet das WakeUp Paket weiter, sofern die IP-Adresse des SMGWs bekannt ist.
      ▪ Kanal 1: zum Smart Meter Gateway (SMGW)
      ▪ Kanal 2: zum GWA
- **Goal:**
   Der GWA kann jederzeit durch Senden eines Wakeup-Pakets eine TLS-Verbindung zwischen sich und dem SMGW aufbauen
- **Prerequisites:**
   ∘ Der GWA verwendet für alle SMGWs die IP-Adresse des SMGW-Abstractor (GWA-Proxy) für WakeUp
   ∘ Das SMGW verwendet die SMGW-Abstractor (GWA-Proxy) IP-Adresse, um eine GWA TLS Verbindung anzufordern
   ∘ Das SMGW ist so konfiguriert, dass es periodisch versucht eine TLS-Verbindung SMGW-Abstractor (GWA-Proxy) aufzubauen
- **Steps:**
   ∘ Das SMGW sendet periodisch Requests zum SMGW-Abstractor (GWA-Proxy), um einen TLS-Kanal aufzubauen
   ∘ Irgendwann sendet der GWA ein (signiertes UDP-) Wakeup Paket, mit HUID des entsprechenden SMGWS, zum SMGW-Abstractor (GWA-Proxy)
   ∘ Der SMGW-Abstractor (GWA-Proxy) akzeptiert nun den TLS Request des SMGWs, welches im Client-Zertifikat die entsprechende HUID trägt und führt entsprechend das TLS Hand Shake durch um einen TLS-Kanal (Nr. 1) aufzubauen.
   ∘ Der SMGW-Abstractor (GWA-Proxy) initiiert einen weiteren TLS Hand Shake Richtung GWA um auch hier einen TLS-Kanal (Nr. 2) aufzubauen.
   ∘ Sobald beide TLS-Kanäle aufgebaut sind, wird jegliche Kommunikation zwischen GWA und SMGW zwischen Kanal 1 und Kanal 2 weitergeleitet.

### Usecase: Close Connection

**∘ Actors:**
   ▪ GWA
   ▪ SMGW
∘ **Description:**
   ▪ Sobald eine Seite (GWA oder SMGW) die TLS-Verbindung abbaut wird auch die entsprechende 2. TLS-Verbindung abgebaut
∘ **Goal:**
   ▪ Alle TLS-Kanäle sind nach einem einseitigen Abbruch der Verbindung geschlossen
∘ **Prerequisites:**
   ▪ Beide TLS-Kanäle sind aktiv
   ▪ Der SMGW-Abstractor (GWA-Proxy) leitet alle Kommunikation über die beiden Kanäle weiter
∘ **Steps:**
   ▪ SMGW oder GWA beendigt seinen TLS-Kanal
   ▪ Der SMGW-Abstractor (GWA-Proxy)schließt alle TLS-Kanäle

Die zweite Variante des ersten Aspekts der Erfindung unterscheidet sich von der ersten Variante des ersten Aspekts der Erfindung insbesondere im Hinblick auf die folgenden Usecases:
Usecase: Wakeup
- **Actors:**
   ∘ GWA
   ∘ Smart Meter Gateway (SMGW)
- **Description:**
   ∘ Der GWA initiiert ein Wakeup
   ∘ Der SMGW-Abstractor/GWA-Proxy öffnet die IP-Route für Requests vom SMGW zum GWA
   ∘ Das SMGW kann einen TLS-Kanal direkt zum GWA aufbauen
- **Goal:**
   Der GWA kann jederzeit durch Senden von einem Wakeup-Paket eine TLS-Verbindung zum SMGW aufbauen
- **Prerequisites:**
   ∘ Der GWA verwendet für alle SMGWs die IP-Adresse des SMGW-Abstractor/GWA-Proxies für das WakeUp Paket
   ∘ Das SMGW verwendet die SMGW-Abstractor/GWA Proxy IP-Adresse um eine TLS-Verbindung zum GWA (Management oder andere) anzufordern
   ∘ Das SMGW ist so konfiguriert, dass es periodisch versucht eine TLS-Verbindung (Management Kanal) zum SMGW-Abstractor/GWA-Proxy aufzubauen
- **Steps:**
   ∘ Das SMGW sendet periodisch Requests zum SMGW-Abstractor/GWA-Proxy einen TLS-Kanal aufzubauen
   ∘ Irgendwann sendet der GWA ein (signiertes UDP-) Wakeup Paket zum SMGW-Abstractor/GWA-Proxy
   ∘ Der SMGW-Abstractor/GWA-Proxy speichert die ETHE-Nummer des zu erweckenden SMGW in seiner "White-List"
   ∘ Der SMGW-Abstractor/GWA-Proxy leitet von diesem Zeitpunkt an alle Requests vom SMGW direkt an den GWA weiter
   ∘ Der vom SMGW initiierte TLS-Handshake wird erfolgreich durchlaufen und damit ein TLS-Kanal zwischen SMGW und GWA aufgebaut, dessen Datenstrom vom SMGW-Abstractor/GWA-Proxy permanent entsprechend weitergeleitet wird.

### Usecase: Close Connection

∘ **Actors:**
   ▪ GWA
   ▪ SMGW
∘ **Description:**
   ▪ Der TLS-Kanal zwischen SMGW und GWA wird geschlossen und es findet keine weiter direkte Interaktion zwischen SMGW und GWA mehr statt
∘ **Goal:**
   ▪ Alle TLS-Kanäle sind nach einem einseitigen Abbruch der Verbindung geschlossen. Es wird kein Datenverkehr mehr vom SMGW an den GWA weitergeleitet.
∘ **Prerequisites:**
   ▪ TLS-Kanal ist aktiv
   ▪ Der SMGW-Abstractor/GWA-Proxy leitet alle Kommunikation vom SMGW an den GWA weiter
∘ **Steps:**
   ▪ SMGW beendigt den TLS-Kanal
   ▪ Der SMGW-Abstractor/GWA-Proxy entfernt die ETHE-Nummer des SMGWs von der "White-List" und stoppt damit das Weiterleiten von IP-Datenverkehr zwischen SMGW und GWA.

Die Erfindung wird nachfolgend anhand von Figuren, die Ausführungsbeispiele darstellen, näher erläutert. Es zeigt:
- Fig.1:: Eine Veranschaulichung des allgemeinen Lösungskonzepts;
- Fig.2a:: eine skizzenhafte Darstellung einer Verbindung zwischen einem SMGW und einem GWA System;
- Fig.2b:: eine skizzenhafte Darstellung des Aufbaus der MANAGEMENT Verbindung gemäß der ersten Variante der Erfindung; und
- Fig.3:: eine skizzenhafte Darstellung des Aufbaus der MANAGEMENT Verbindung gemäß der zweiten Variante der Erfindung.

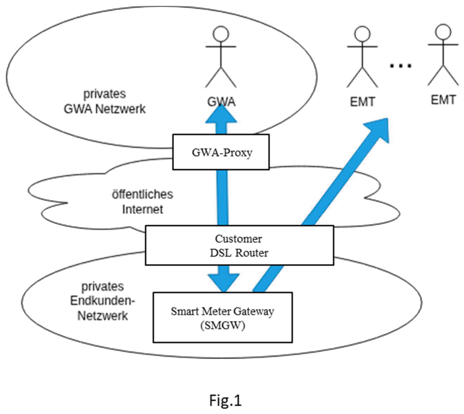

Figur 1 veranschaulicht das allgemeine Lösungskonzept:
Ein SMGW-Abstractor / GWA-Abstractor / GWA Proxy 40 fungiert als Weiterleitungs- und Vermittlungsknoten. Es ist netzwerktechnisch sowohl an das private GWA-Netz 1 als auch an das öffentliche Internet 2 angebunden. Dieser SMGW-Abstractor / GWA Abstractor / GWA Proxy 40 kann als Hosted-Service für mehrere GWAs und Messtellenbetreiber angeboten werden.

Dieser SMGW-Abstractor / GWA-Abstractor / GWA Proxy 40 ist sowohl im öffentlichen Internet 2 als auch im privaten GWA-Netz 1 mit festen IP-Adressen erreichbar. Damit kann er sowohl vom SMGW 10 als auch vom GWA System 50 direkt adressiert werden.

Im SMGW-Abstractor / GWA-Abstractor / GWA Proxy 40 findet eine Network Address Translation (NAT) zwischen den IP-Adressen vom GWA-Netzwerk 1 zum öffentlichen Internet 2 statt. Das SMGW kennt nur die IP des SMGW-Abstractor / GWA-Abstractor / GWA Proxy 40 und sendet alle TLS Requests an diesen. Der GWA sendet "Wakeup" Pakete nur an den SMGW-Abstractor / GWA-Abstractor / GWA Proxy 40.

Aus Sicherheitsgründen sollen die TLS-Kanäle aber ausschließlich direkt Ende-zu-Ende zwischen SMGW 10 und GWA-System 50 etabliert werden.

Das allgemeine Konzept umfasst insbesondere folgende Punkte:
- Anstoßen einer adhoc-TLS Verbindung zwischen SMGW und SMGW-Abstractor / GWA-Abstractor / GWA Proxy 40 über einen Wakeup Mechanismus
- Etablierung einer TLS-Verbindung Ende zu Ende Verbindung zwischen GWA-System 50 und SMGW 10 über das SMGW-Abstractor / GWA-Abstractor / GWA Proxy 40

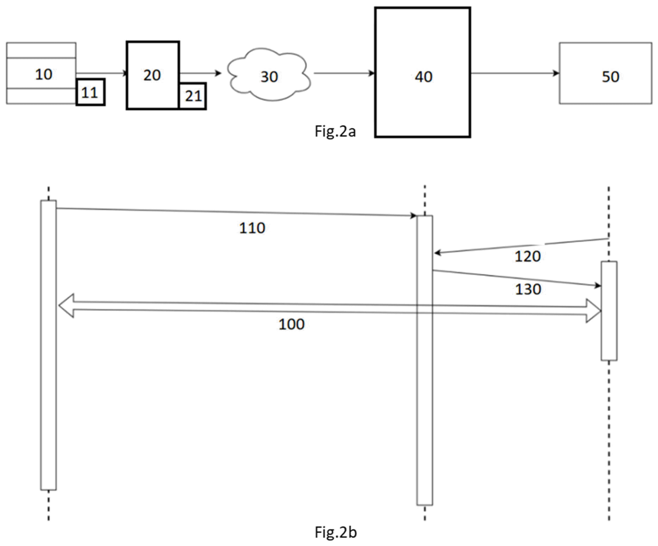

Figur 2a zeigt skizzenhaft eine Verbindung zwischen einem SMGW 10 und einem GWA System 50. Das SMGW 10 ist -in diesem Beispiel über eine an einem Ethernet-Port des SMGW 10 eingesteckte erste CX-Bridge 11 und eine an einem Ethernet-Port eines Routers 20 eingesteckte zweite CX-Bridge 21- mit dem Router 20 verbunden, der einen Anschluss zum Internet 30 verbunden ist, mit dem ein SMGW-Abstractor 40 in Verbindung steht. Der SMGW-Abstractor 40 kann eine Verbindung zu einem GWA System 50 aufbauen, um eine MANAGEMENT Verbindung 100 zwischen SMGW und GWA-System bereitzustellen.

Figur 2b zeigt die einzelnen Schritte beim Aufbau der MANAGEMENT Verbindung 100, wobei die Zeitachse von oben nach unten verläuft und die Position der dargestellten Blöcke in linksrechts-Richtung angibt, welche der in Figur 1 dargestellten Komponenten jeweils miteinander verbunden sind.

Die MANAGEMENT Verbindung 100 zwischen SMGW 10 und GWA System 50 hat einen "statischen" Teil, der durch eine vom SMGW 10 selbständig aufgebaute und unterhaltene Verbindung 110 über das Internet 30 ist, die vom SMGW 10 ausgeht und an dem SMGW-Abstractor 40 terminiert. Sie wird vom SMGW-Abstractor 40 offengehalten.

Wird nun vom GWA System 50 eine MANAGEMENT Verbindung 100 zum SMGW 10 benötigt, sendet das GWA System 50 einen Wake-Up Call 120 mittels UDP, der eine Identifikation des SMGW 10, zu dem die MANAGEMENT Verbindung 100 aufgebaut werden soll enthält, an den SMGW-Abstractor 40.

Der angesprochene SMGW-Abstractor 40 baut daraufhin eine temporäre Verbindung 130 zum GWA System 50 auf, die die MANAGEMENT Verbindung 100 vervollständigt und übernimmt in der MANAGEMENT Verbindung 100 die Rolle eines Proxy-Servers, der sich in Richtung des SMGW 10 wie ein GWA System 50 und in Richtung des GWA Systems 50 wie ein SMGW 10 verhält.

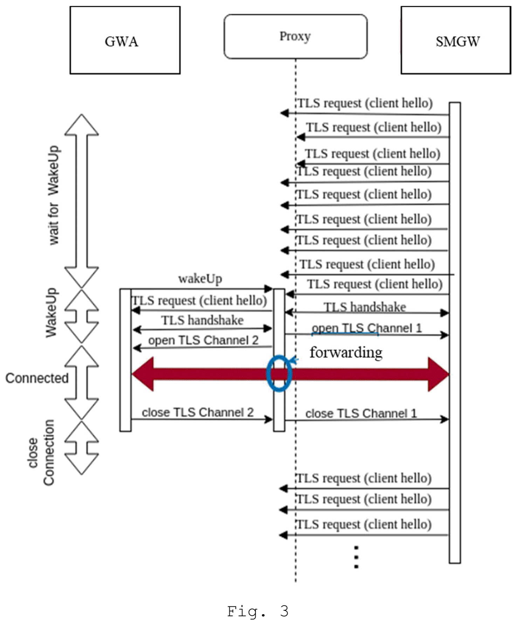

Die alternative Vorgehensweise gemäß der zweiten Variante der Erfindung, die in Figur 3 dargestellt ist, ist folgendermaßen:
1. Das SMGW 10 sendet periodisch TLS-Client-Hello Requests nach dem TLS-Standard zum SMGW-Abstractor / GWA-Abstractor / GWA Proxy 40 mit dem Ziel einen Administrationskanal (Management Kanal) aufzubauen.
2. Der SMGW-Abstractor / GWA-Abstractor / GWA Proxy 40 beantwortet zunächst diese Requests, leitet den Request aber nicht an das GWA-System 50 durch und führt den TLS-Handshake auch nicht vollständig durch.
3. Das SMGW 10 versucht neben dem Administrationskanal (Management Kanal) weitere TLS-Kanäle zum GWA-System 50 aufzubauen z.B. einen NTP-Kanal, um die Zeit zu synchronisieren.
4. Diese Kanäle werden je nach Konfiguration des SMGW-Abstractor / GWA-Abstractor / GWA Proxy 40, direkt durchgereicht.
5. Aus den TLS Handshake Nachrichten extrahiert der SMGW-Abstractor / GWA-Abstractor / GWA Proxy 40 die SMGW HUID. Diese Extraktion kann abhängig von der TLS-Version auf unterschiedliche Weise durchgeführt werden:
   a. TLS-Version bis v1.2
      → Die SMGW HUID steht unverschlüsselt im öffentlichen TLS-Zertifikat des SMGWs 10
   b. TLS-Version ab v1.3
      →Die SMGW HUID wird vom SMGW 10 als "Private Use" Extension nach RFC 5246 (TLS v1.2) und RFC 8446 (TLS v1.3) zum TLS-Client Hello Request seitens SMGW 10 hinzugefügt. Die Client Hello Nachricht und die darin enthaltenen Extensions sind bei der TLS-Version v1.3 nicht verschlüsselt, folgende Handshake Pakete hingegen schon, deshalb kann die HUID nicht mehr wie bei der TLS v1.2 aus dem Zertifikat extrahiert werden. Der Mechanismus die SMGW HUID über Client Hello Extensions zu ermitteln ist auch in der TLS-Version v1.2 anwendbar.
6. Der SMGW-Abstractor / GWA-Abstractor / GWA Proxy 40 speichert die SMGW HUID des potenziell zu erweckenden SMGW in einer "Wakeup-Liste".
7. Das GWA System 50 sendet ein Wakeup Paket für ein bestimmtes SMGW 10 zum SMGW-Abstractor / GWA-Abstractor / GWA Proxy 40. Das Wakeup Paket ist ein nicht verschlüsseltes UDP-Paket, welches die eindeutige SMGW-HUID enthält
8. Der TLS-Datenverkehr (Management Kanal) des SMGWs 10, dessen HUID in der "Wakeup-Liste" verzeichnet ist, wird vom SMGW-Abstractor / GWA-Abstractor / GWA Proxy 40 bidirektional (SMGW ↔ GWA) weitergeleitet. Je nach Konfiguration wird nur der "Management-Kanal" zur Weiterleitung freigegeben oder auch alle anderen "Admin Kanäle". Dieser Zustand wird in einer "White-List" gespeichert. Dieses "White-Listing" wird, je nach Konfiguration, aufrechterhalten, solange eine Datenkommunikation vorhanden ist, ein entsprechendes Wakeup Paket seitens GWA System 50 empfangen wird und die konfigurierte "White-List" Dauer nicht abgelaufen ist.
9. Im SMGW-Abstractor / GWA-Abstractor / GWA Proxy 40 erfolgt eine Network Address Translation (NAT) zwischen den beiden Netzen (privates GWA-Netz 1 und öffentliches Internet 2).
10. Damit kann der TLS Kanal Aufbau direkt zwischen SMGW 10 und GWA System 50 erfolgen, ohne dass GWA System 50 und SMGW 1ß die IP-Adresse des jeweiligen Partners direkt kennen.

### Bezugszeichenliste

- 1: privates GWA Netz
- 2: öffentliches Internet
- 10: SMGW
- 11: erste CX-Bridge
- 20: Router
- 21: zweite CX-Bridge
- 30: Internet
- 40: SMGW-Abstractor / GWA-Abstractor / GWA Proxy
- 50: GWA System
- 100: MANAGEMENT Verbindung
- 110: Verbindung
- 120: Wake-Up Call
- 130: temporäre Verbindung

## Patentansprüche

1. Verfahren zum Betrieb eines SMGW (10), bei dem das SMGW (10) über ein GWA System (50) durch bedarfsweisen Aufbau einer MANAGEMENT Verbindung (100) zwischen GWA System (50) und SMGW (10) administriert wird,
**dadurch gekennzeichnet, dass** die MANAGEMENT Verbindung (100) unter Verwendung einer vom SMGW (10) selbständig aufgebauten und unterhaltenen Verbindung (110) über das Internet (30), die vom SMGW (10) ausgeht und an einem SMGW-Abstractor (40) terminiert und vom SMGW-Abstractor (40) offengehalten wird, und einer bedarfsweise vom SMGW-Abstractor (40) zum GWA System (50) aufgebauten temporären Verbindung (130) gebildet wird.

2. Verfahren nach Anspruch 1,
**dadurch gekennzeichnet, dass** der Aufbau der temporären Verbindung (130) zwischen SMGW-Abstractor (40) und GWA System (50) durch einen Wake-Up Call (120) initiiert wird, wobei der Wake-Up Call (120) eine Identifikation des vom GWA System (50) angeforderten SMGW enthält (10).

3. Verfahren nach Anspruch 2,
**dadurch gekennzeichnet, dass** der Wake-Up Call (120) über UDP erfolgt und ein Wake-Up Paket an den SMGW-Abstractor gesendet wird.

4. Verfahren nach Anspruch 2 oder 3,
**dadurch gekennzeichnet, dass** die Identifikation des vom GWA System (50) angeforderten SMGW (10) über ein HUID-Matching unter Verwendung von Informationen zum SMGW-Zertifikat des jeweiligen SMGW (10) erfolgt. Oder Alternativ bei TLS ab der Version 1.3 auf TLS-Extensions im Private-Use Bereich zurückgegriffen wird um ein HUID Matching zu ermöglichen. Ebenso werden andere TLS Verbindungen neben der MANAGEMENT Verbindung genutzt um ein SMGW eindeutig zu identifizieren.

5. Verfahren nach einem der Ansprüche 2 bis 4,
**dadurch gekennzeichnet, dass** der SMGW-Abstractor (40) wenn die MANAGEMENT Verbindung (100) aufgebaut ist als Proxy-Server fungiert, der sich in Richtung des SMGW (10) wie ein GWA System (50) und in Richtung des GWA Systems (50) wie ein SMGW (10) verhält.

6. Verfahren nach einem der Ansprüche 2 bis 5,
**dadurch gekennzeichnet, dass** die vom SMGW (10) selbständig aufgebaute und unterhaltene Verbindung (110) über das Internet (30), die vom SMGW (10) ausgeht und an einem SMGW-Abstractor (40) terminiert und vom SMGW-Abstractor (40) offengehalten wird bereits vor dem Erhalt des Wake-up calls gebildet wird.

7. Verfahren nach einem der Ansprüche 2 bis 6,
**dadurch gekennzeichnet, dass** der SMGW-Abstractor (40) in einem privaten Netz des GWA-Systems direkt adressierbar ist und dass wenn die MANAGEMENT Verbindung (100) aufgebaut ist eine Network Address Translation zwischen den IP-Adressen im privaten Netz des GWA Systems zum öffentlichen Internet erfolgt.

8. Verfahren nach einem der Ansprüche 2 bis 7,
**dadurch gekennzeichnet, dass** die vom SMGW (10) selbständig aufgebaute und unterhaltene Verbindung (110) über das Internet (30), die vom SMGW (10) ausgeht und an einem SMGW-Abstractor (40) terminiert und vom SMGW-Abstractor (40) offengehalten wird erst nach dem Erhalt des Wake-up calls gebildet wird.

9. Verfahren nach einem der Ansprüche 1 bis 8 oder nach dem Oberbegriff des Anspruchs 1,
**dadurch gekennzeichnet, dass** das SMGW (10) über einen Router (20) mit dem Internet (30) verbunden wird, wobei die Verbindung des SMGW (10) zum Router (20) über eine an einem Ethernet-Anschluss des SMGW (10) angesteckte erste CX-Bridge (11) hergestellt ist.

10. Verfahren nach Anspruch 9,
**dadurch gekennzeichnet, dass** die Verbindung der ersten CX-Bridge (11) zum Router (20) über eine WLAN-Verbindung hergestellt wird.

11. Verfahren nach Anspruch 10,
**dadurch gekennzeichnet, dass** die Verbindung der ersten CX-Bridge (11) zum Router (20) über eine zweite CX-Bridge (21), die an den Router (20) angeschlossenen ist, erfolgt.

12. Verfahren nach Anspruch 11,
**dadurch gekennzeichnet, dass** ein Pairing zwischen der ersten CX-Bridge (11) und der zweiten CX-Bridge (21) durchgeführt wird.
